# FASCICULE DE BREVET EUROPEEN

(11) **EP 3 142 848 B1**
(45) Date de publication et mention de la délivrance du brevet: **25.04.2018**
(21) Numéro de dépôt: 15722514.5
(22) Date de dépôt: 07.05.2015
(51) Int. Cl.: B29C 47/86, B29C 47/92, B29D 30/06, B29C 73/16, B29L 30/00, B29K 9/00, B29C 73/18, B29C 47/02, B29C 47/08, B29C 47/60

(54) **PROCEDE DE POSE D'UN PRODUIT AUTO-OBTURANT SUR LA SURFACE INTERNE D'UN PNEUMATIQUE**
VERFAHREN ZUR PLATZIERUNG EINES SELBSTVERSCHLIESSENDEN PRODUKTS AUF DER INNENFLÄCHE EINES REIFENS
METHOD FOR PLACING A SELF-SEALING PRODUCT ON THE INNER SURFACE OF A TYRE

(30) Priorité: 13.05.2014 FR 1454248
(43) Date de publication de la demande: 22.03.2017
(73) Titulaire: Compagnie Générale des Etablissements Michelin, 63000 Clermont-Ferrand (FR)
(72) Inventeur: BARJON, Stéphane, F-63040 Clermont-Ferrand Cedex 9 (FR); BELDENT, Christian, F-63040 Clermont-Ferrand Cedex 9 (FR); DUSSARDIER, Bruno, F-63040 Clermont-Ferrand Cedex 9 (FR); JOANDEL, Sarah, F-63040 Clermont-Ferrand Cedex 9 (FR)
(74) Mandataire: Noel, Luminita
(86) Numéro de dépôt international: PCT/EP2015/060118
(87) Numéro de publication internationale: WO 2015/173120

(56) Documents cités:
- EP-A2- 0 229 708
- US-A- 3 981 342
- US-A- 4 115 172
- US-A1- 2013 202 829

## Description

L'invention concerne le domaine de la fabrication des pneumatiques, et plus particulièrement le domaine des pneumatiques comportant des compositions à propriétés auto-obturantes utilisées comme couche anti crevaison, et destinées à combler les perforations permettant ainsi d'éviter la mise à plat du pneumatique en cours d'utilisation.

Ces compositions auto-obturantes (*self-sealing compositions*) se définissent par leurs propriétés physico chimiques, et se caractérisent en ce qu'elles sont aptes, sous l'effet de la pression interne régnant dans le pneumatique, à fluer dans les chemins d'écoulement de l'air vers l'extérieur, en vue de les obturer et rétablir l'étanchéité. Elles doivent être également spécialement adaptées pour conserver une bonne stabilité dimensionnelle sous l'effet des variations de température, des forces de gravité ou des forces centrifuges, de manière à ne pas modifier la répartition des masses dans le pneumatique.

De nombreuses compositions aptes à produire ces effets sont décrites dans l'état de la technique, mais n'ont pas pu vraiment se développer dans les bandages pneumatiques pour véhicules, notamment par manque de stabilité dans le temps ou d'efficacité dans des conditions extrêmes de température d'utilisation, ou encore en raison de difficultés de fabrication et/ou d'utilisation de ces compositions auto-obturantes.

Ainsi, pour contribuer à maintenir une bonne efficacité à haute température, le document US-A-4 113 799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique. Le document US 4,115,172 divulgue un procédé de pose d'une composition auto-obturante à base de caoutchouc sur la surface intérieure d'une enveloppe de pneumatique selon le préambule de la revendication 1. Le document US 2013/0202829 divulgue un procédé similaire.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Les caoutchoucs butyls offrent malgré tout l'inconvénient de présenter des pertes hystérétiques importantes (soit un niveau élevé de Tan δ) sur un spectre large de température, inconvénient qui se répercute sur les compositions auto-obturantes elles-mêmes avec une forte augmentation de l'hystérèse, et une pénalisation notable de la résistance au roulement des bandages pneumatiques.

Aussi, de manière alternative, il peut s'avérer intéressant d'utiliser pour le même type d'application des compositions auto-obturantes à base d'élastomère diénique insaturé (caoutchouc naturel) qui sont décrites par exemple dans les publications US-A-4 913 209, US-A-5 085 942 et US-A-5 295 525. Ces compositions se caractérisent par la présence combinée d'un taux élevé de résine hydrocarbonée à titre d'agent tackifiant "tackifier", toujours supérieur à 100 parties en poids pour cent parties. En outre, une quantité importante d'élastomère liquide donne une fluidité élevée à la composition qui est source d'autres inconvénients, notamment d'un risque de fluage de la composition auto-obturante lors d'une utilisation à température relativement élevée (typiquement supérieure à 60°C) fréquemment rencontrée lors de l'utilisation des pneumatiques dans certaines zones géographiques.

Plus prometteuse, une composition exempte de caoutchouc butyl, et de quantités importantes de résine hydrocarbonée et d'élastomère liquide, est décrite dans la publication FR 2 955 587 de la demanderesse. Cette composition est à base d'un coupage d'un élastomère polybutadiène ou copolymère de butadiène et d'un élastomère caoutchouc naturel ou poly-isoprène de synthèse, (le rapport pondéral entre les deux élastomères étant compris dans un domaine de 10:90 à 90:10) ; d'une résine hydrocarbonée (entre 30 et 90 pce) ; et d'une charge (0 à moins de 30 pce).

Ces compositions contiennent simultanément un réseau de chaines élastomériques de grande taille et à haut poids moléculaire, et un réseau de chaines élastomériques de courte taille à bas poids moléculaire. A l'état réticulé, les chaines élastomériques de longue taille constituent un réseau apte à enserrer de manière élastique les chaines élastomériques plus courtes et donc plus propices à conserver leurs propriétés plastiques.

Toutes ces compositions se caractérisent en ce que, à l'état non réticulé, comme à l'état réticulé, elles présentent une fluidité et un collant à cru (*tack*) très importants en comparaison des compositions de caoutchouc entrant traditionnellement dans la fabrication des pneumatiques. Ce niveau important du collant ne permet pas de réaliser la cuisson de ces compositions dans un moule, car le démoulage après cuisson est quasiment impossible.

Toutefois, les conditions de pression et de confinement, telles qu'elles sont présentes lors d'une cuisson dans un moule, doivent être respectées lors de la cuisson des compositions à base d'élastomères afin d'obtenir les propriétés attendues du matériau après réticulation.

Aussi, leur mise en oeuvre dans les procédés d'extrusion et d'assemblage communs, est à l'origine de toute une source de problèmes.

En particulier, lors du processus d'assemblage, la réalisation et la pose sur une surface de réception d'un profilé présentant des caractéristiques dimensionnelles calibrées s'avèrent particulièrement délicate en ce que la géométrie du profilé peut se déformer de manière importante sous l'effet des sollicitations mécaniques liées aux manipulations et au transfert dudit profilé, et telles que le décollage d'un support, la mise en tension lors de la pose etc.....

L'invention a pour objet de résoudre ces difficultés en tirant parti des propriétés rhéologiques énoncées ci-dessus, et que peuvent présenter ces matériaux sous l'effet de la température ou de contraintes mécaniques élevées.

Ainsi, à rebours de toutes les idées reçues sur la mise en forme des produits d'extrusion, il a été mis en évidence que la forte plasticité des matériaux auto-obturants à haute température autorisait leur mise en forme dans une filière d'extrusion, alors qu'ils sont déjà dans une phase très avancée de leur réticulation.

Selon l'invention, le procédé de pose d'une composition auto-obturante à base de caoutchouc sur la surface interne d'une enveloppe qui prend sa forme d'usage sous l'effet d'une pression d'air interne comprend les étapes au cours desquelles :
- on introduit une composition auto-obturante non réticulée dans un moyen d'extrusion dont les caractéristiques géométriques et thermodynamiques ont été spécialement adaptées,
- on ajuste les conditions de vitesse et de température du moyen d'extrusion de sorte que, au niveau d'une buse d'application formant la filière de sortie dudit moyen d'extrusion, la composition auto-obturante est réticulée et,
- on approche la buse d'application de la surface interne de ladite enveloppe préalablement mise en mouvement relatif par rapport à la buse d'application, et on dépose directement un cordon extrudé et réticulé de largeur et de profil donné sur ladite surface interne de l'enveloppe.

La mise en forme et la dépose finale à l'intérieur du pneumatique se font en une seule étape, ce qui permet de s'affranchir de toutes les phases de manipulation intermédiaires du produit comme cela se pratique couramment sur un procédé traditionnel d'assemblage.

Pour apprécier l'état de réticulation de la composition auto-obturante et son passage de l'état non réticulé à l'état réticulé, on utilisera de manière préférentielle la valeur du rapport G"/G' (Tgδ) de la composition auto-obturante et on s'assure alors que ce rapport diminue d'une valeur supérieure à 0,1 et préférentiellement d'une valeur supérieure à 0,2, lorsqu'elle passe de l'état non réticulée à l'état réticulée.

Préférentiellement, la valeur du rapport G"/G' (Tgδ) de la composition auto-obturante non réticulée est comprise entre 1,2 et 3 et encore plus préférentiellement entre 1,25 et 2,5.

Préférentiellement, la valeur du rapport G"/G' (Tgδ) de la composition auto-obturante réticulée est comprise entre 0,66 et 2 et encore plus préférentiellement entre 0,80 et 1,4.

Avantageusement, on combine les propriétés de rhéofluidité et de diminution de la viscosité en fonction de la température de la composition auto-obturante avec le mode d'apport des calories de manière à maitriser l'intégrité de la matrice élastomérique en cours de réticulation dans l'extrudeuse. Ainsi, la composition auto-obturante utilisée pour la mise en oeuvre de l'invention présente un comportement rhéofluidifiant, on comprend donc que sa viscosité diminue avec l'augmentation du taux de cisaillement qui lui est appliqué dans l'extrudeuse. Le mode d'application des calories est ensuite choisi de manière à ce que la composition soit réticulée au niveau de la filière ou buse de sortie de l'extrudeuse.

Préférentiellement, le moyen d'extrusion est formé par une vis de longueur (L) et de diamètre (D) mise en rotation à l'intérieur d'un fourreau.

Préférentiellement, le rapport (L/D) entre la longueur et le diamètre de la vis est compris entre 15 et 30. Ces valeurs du rapport L/D ont été choisies après des tests effectués en laboratoire de manière à ce que le temps de séjour du matériau dans des conditions préétablies dans l'extrudeuse permette la réticulation du matériau en sortie de celle-ci pour un débit assurant une bonne productivité du procédé de pose selon l'invention. En effet, la cadence de pose fixe le débit d'extrusion et par relation avec le volume de produit confiné dans l'extrudeuse et sa filière, le temps de séjour du produit dans cet ensemble. La cuisson se faisant entièrement dans l'extrudeuse et sa filière, le temps de séjour dans cet ensemble et le temps de cuisson sont confondus. La température de cuisson est ajustée en fonction du temps de séjour pour atteindre le niveau de cuisson optimum en sortie de buse. Le bon compromis entre température maximale du matériau et temps de séjour est obtenu par ajustement du volume de produit confiné et donc du rapport L/D.

Préférentiellement, on ajuste les conditions de température et de vitesse du moyen d'extrusion de manière à ce que la composition séjourne à l'intérieur du moyen d'extrusion à une température comprise entre 150°C et 200°C pendant un temps compris entre 1min et 20min, et de préférence compris entre 1 min et 6 min.

Préférentiellement, on ajuste les conditions de température et de vitesse du moyen d'extrusion de sorte que la quantité d'énergie thermique apportée à la composition auto-obturante sous forme d'énergie mécanique soit inférieure à 75% de l'énergie thermique totale apportée à ladite composition auto-obturante.

Préférentiellement, la vitesse de sortie de la composition auto-obturante de la buse d'application est comprise entre 1 ms⁻¹ et 4 ms⁻¹.

Préférentiellement, on dépose la composition auto-obturante, par enroulement dudit cordon en faisant varier le pas et la position axiale de la buse d'application par rapport à l'enveloppe de pneumatique. Ceci permet d'utiliser une seule buse et donc de s'affranchir de l'utilisation d'outils spécialement conçus pour chaque dimension de pneumatique.

Préférentiellement, on pose ledit cordon de manière continue en déplaçant la buse d'application tangentiellement à la surface interne du pneumatique depuis l'équateur de l'enveloppe vers une première épaule, puis en repartant en sens inverse en direction d'une deuxième épaule opposée en passant par l'équateur, et en revenant finalement au niveau de l'équateur. Une telle méthode de pose de cordon permet d'assurer une répartition homogène des masses à l'intérieur du pneumatique, et donc de minimiser l'impact sur les caractéristiques initiales d'uniformité du même pneumatique

Préférentiellement, l'enveloppe de pneumatique est à l'état vulcanisé.

Comme cela a été évoqué ci-dessus, les matériaux auto-obturant ont des caractéristiques de module très particulières rendant l'évaluation de leur état de vulcanisation délicate. On entend ici par vulcanisation, également et plus généralement par réticulation, la formation des liaisons entre les composants de la matrice élastomère et les éléments du système de vulcanisation. Les systèmes de réticulation les plus courants sont les systèmes à base de soufre, pour lesquels on parlera alors de vulcanisation, mais l'invention peut aussi concerner d'autres systèmes de réticulation connus tels que par exemple les systèmes de réticulation à base de peroxyde.

Le taux de réticulation a, est calculé en mesurant la quantité de souffre libre, c'est-à-dire non lié à une chaine d'élastomère. Lorsque tout le soufre libre de la composition a été consommé, on considère que la réticulation/vulcanisation est achevée, et que le taux de réticulation α est de 100%.

Par assimilation on peut évaluer le taux de réticulation, à une température donnée, en l'espèce à la température de consigne du procédé, en mesurant l'évolution de la rigidité de la composition à l'aide d'un rhéomètre, et en comparant cette rigidité à la rigidité maximale obtenue par la composition auto-obturante lorsque elle est considérée comme totalement réticulée, c'est-à-dire lorsque sa rigidité n'évolue plus.

Lorsque les mesures de rigidité sont effectuées avec un rhéomètre à chambre oscillante, selon la norme DIN 53529 - partie 3 (juin 1983), où les mesures sont traitées selon la norme DIN 53529 - partie 2 (mars 1983), on considèrera par assimilation que la vulcanisation est pratiquement achevée lorsque que le couple mesuré en sortie de la buse d'application est au moins égal à 80% du couple maximum.

Toutefois, compte tenu de la spécificité des compositions auto-obturantes qui présentent des taux de rigidité très faibles, il s'avère difficile de mesurer avec précision le taux de vulcanisation à l'aide des moyens décrits ci-dessus.

Aussi, dans le cadre de l'invention faisant l'objet de la présente description, il est proposé de faire appel à des mesures substitutives permettant d'apprécier le degré de réticulation/vulcanisation, en déterminant la valeur Tgδ, qui est le rapport du module visqueux et du module élastique G"/G'.

La méthode de mesure de G' et de G" utilise un appareil de rhéologie à disque oscillant de type RPA, tel que le dispositif 2000 fourni par la Société Alpha Technologie™, équipé du capteur de viscosité standard 20 in.lbs (22.6 dNm). La machine RPA permet de solliciter en torsion un échantillon de matériau enfermé dans une chambre (ou enceinte) à parois biconiques. Cette méthode est décrite ci-après en référence à la norme ISO 3417 de février 2009, qui donne les paramètres de préparation et de tests pour analyser un temps de vulcanisation d'un échantillon dans le rhéomètre et dans laquelle certains paramètres ont été modifiés pour tenir compte de la très faible rigidité des mélanges de type auto-obturants.

Pour réaliser la mesure, on dépose un échantillon de matériau d'environ 30mm de diamètre et de masse d'environ 6g dans l'enceinte du RPA (un volume total de 7 cm3 est considéré comme optimal ; la quantité est suffisante lorsqu'une petite quantité d'échantillon s'échappe de chaque côté de l'enceinte et qu'elle est visible à la fin du test).

A la fin de cette opération, l'échantillon est parfaitement moulé dans l'enceinte fermée du RPA.

L'échantillon est ensuite porté à une température de consigne directement dans la chambre du RPA.

Il est alors possible de débuter la mesure de la valeur de G' et G" à un taux de cisaillement dynamique alterné donné, et dans une gamme de fréquence et de température prédéfinies.

Dans le cas des compositions auto-obturantes faisant l'objet de la présente demande, la mesure de la valeur de Tgδ s'effectue à une température de 130°C, à une amplitude de déformation alternée de 40% et pour une plage de fréquences comprises entre 0,033Hz et 1Hz. La valeur retenue pour la mesure du Tgδ est la valeur observée à une fréquence de 0,033Hz.

Les mélanges auto-obturants présentent la particularité de voir la valeur de Tgδ baisser de manière sensible lorsqu'ils passent de l'état non vulcanisé à l'état vulcanisé. Cette diminution est d'au moins 0,1 et en règle générale supérieure à 0,2.

Ainsi, dans le cadre de l'invention et de la présente description on entend par mélange auto-obturant non réticulé/non vulcanisé, un mélange présentant une valeur de Tgδ comprise entre 1,2 et 3 et de préférence comprise entre 1,25 et 2,5. Et, on entend par mélange auto-obturant réticulé/vulcanisé, un mélange présentant, en sortie de la buse d'extrusion, une valeur de Tgδ comprise entre 0,66 et 2 et de préférence comprise entre 0,8 et 1,4.

La description qui suit a pour objet d'illustrer de manière non limitative un exemple de mise en oeuvre de l'invention et s'appuie sur les figures 1 à 3 dans lesquelles :
- la figure 1 représente un dispositif d'extrusion apte à mettre en oeuvre le procédé selon l'invention,
- la figure 2 représente un diagramme de répartition des apports thermiques conférés à la composition auto-obturante en fonction du débit et de la vitesse de rotation de la vis,
- la figure 3 représente un diagramme illustrant le comportement rheofluidifiant de la composition auto-obturante, notamment la variation de la viscosité avec le taux de cisaillement à basse température et son évolution avec la température.

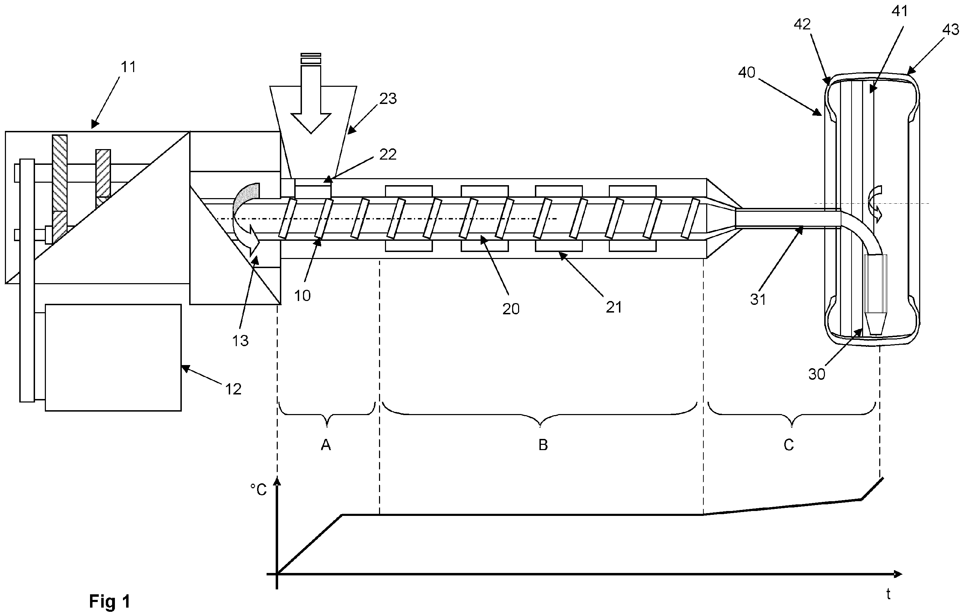

La figure 1 représente un dispositif d'extrusion apte à mettre en oeuvre le procédé selon l'invention. Ce dispositif d'extrusion monté sur un châssis porteur 13 comprend une vis 20 entrainée en rotation dans un fourreau 10 par un moteur 12 et un réducteur 11.

Le fourreau comprend en amont une zone d'alimentation 23 par laquelle la composition auto-obturante non réticulée est introduite. Un galet bourreur 22 permet d'assurer une bonne régularité de l'introduction du mélange.

En aval de l'ensemble d'extrusion, est disposé un conduit 31 débouchant sur une buse d'application 30 de type connu, et décrite à titre d'exemple dans la publication EP 268 544 ou encore dans la publication EP 264 600.

La buse d'application est disposée en vis-à-vis de la surface interne d'un pneumatique 40 en rotation autour de son axe, de manière à autoriser la dépose par enroulements successifs d'un cordon 41 de la composition auto-obturante, de profil et d'épaisseur calibrés. Un mouvement de déplacement axial en translation est imprimé à la buse afin de pouvoir déposer en continu plusieurs cordons 41 par trancanage, celle-ci étant reliée à la sortie de l'extrudeuse par un tuyau flexible.

Le fourreau 20 comprend des moyens de chauffage 21. Ces moyens de chauffage sont aptes à réguler la température du fourreau sur une plage allant de 140°C à 220°C de manière à maintenir la température du matériau entre 150°C et 200°C.

Préférentiellement, on choisira donc des moyens tels que des résistances électriques, un caloduc spécialement adapté pour fonctionner à ce niveau de température, ou encore des moyens tels que de la vapeur sous pression dont on fera observer ici qu'ils sont plus difficiles à mettre en oeuvre pour réguler la température sur la plage considérée. Il est également possible d'installer des moyens de chauffage de même nature que précédemment dans le corps de la vis pour apporter un complément de chaleur à la composition.

Le processus de réticulation de la composition auto-obturante est lié à plusieurs paramètres relevant tout autant de la configuration du moyen d'extrusion que de la rhéologie et de la composition du mélange auto-obturant, et dont on rappellera ci-après les principes généraux.

Il convient en effet d'ajuster avec discernement les paramètres de mise en oeuvre du dispositif d'extrusion pour que l'énergie apportée à la composition pendant le temps de transfert soit suffisante pour obtenir une composition réticulée au point de sortie de la buse d'application 30.

L'évolution thermique en fonction du temps de la composition au cours de son cheminement à l'intérieur du fourreau est représentée schématiquement par le diagramme figurant à la figure 1.

La première zone A, proche de la zone d'alimentation a pour objet de faire passer la température de la composition de la température d'introduction, assimilée à la température ambiante dans l'atelier, à la température de consigne comprise, pour la plupart des compositions auto-obturantes utilisées, entre 140°C et 220°C et préférentiellement entre 170°C et 200°C.

En régime stabilisé (on comprend en régime normal de fonctionnement), l'apport thermique pendant le séjour de la composition dans la zone de transfert B est relativement constant.

Enfin, le passage de la composition dans le conduit et dans la buse d'application, correspondant à la zone d'extrusion C, dans lequel la composition connait un échauffement plus important pendant un temps relativement bref (l'axe du temps sur le diagramme de la figure 1 étant uniquement illustratif et non significatif au niveau de l'échelle de représentation temporelle d'une zone par rapport à l'autre). Ainsi, lors des tests effectués en laboratoire, il a été établi que la durée ou temps de séjour du matériau dans la zone C est égal ou inférieur à 10% du temps total de séjour du matériau entre le moment où il est chauffé à la température de consigne dans la zone d'alimentation A et la sortie au niveau de la buse d'application 30, ce temps total de séjour constituant le temps de cuisson du matériau en vue de sa réticulation.

Le choix de la température de consigne va dépendre au premier ordre de la vitesse de rotation de la vis, laquelle va agir d'une part sur le temps de séjour de la composition à l'intérieur du fourreau, ce qui fait varier les apports thermiques par conduction des parois vers le mélange, et d'autre part sur l'énergie mécanique survenant du fait du frottement et du cisaillement du mélange entre les parois de la vis et du fourreau et transformée en énergie thermique ; à cet effet on peut adapter l'entrefer entre les filets de la vis et le fourreau qui définit le cisaillement subi par la composition auto-obturante.

Pour des raisons pratiques, et en particulier pour maitriser les temps de cycle, qui peuvent comprendre des phases d'arrêt au cours desquelles la vis est arrêtée, on peut rechercher à augmenter la part de l'énergie mécanique transformée en chaleur de manière à réduire les apports d'énergie pendant les phases d'arrêt et à ne pas altérer de façon trop sensible la réaction de vulcanisation en raison de la prolongation de l'apport d'énergie par contact avec les parois dont l'inertie thermique est élevée.

Il n'est toutefois pas possible de laisser croitre la part de l'énergie mécanique au-delà de certaines limites. En effet, il a été mis en évidence que les mélanges auto-obturants sont susceptibles de perdre leurs propriétés lorsqu'ils sont soumis à des taux de cisaillement trop importants. Aussi, on veillera à ce que l'énergie transmise par les effets mécaniques soit inférieure à 75% du total de l'apport thermique conféré au mélange. Cette limite, qui a pour objet de réduire les effets de la conduction permet d'obtenir des états de réticulation relativement stables, pour des temps d'interruption de cycle pouvant aller jusqu'à une dizaine de minutes.

Pour ajuster l'apport thermique par conduction, on peut par exemple modifier la hauteur des filets, la valeur de la surface d'échange entre la composition circulant dans le corps du moyen d'extrusion et les pièces chauffantes dudit moyen d'extrusion. On peut aussi agir sur la température de consigne des moyens de chauffage 21.

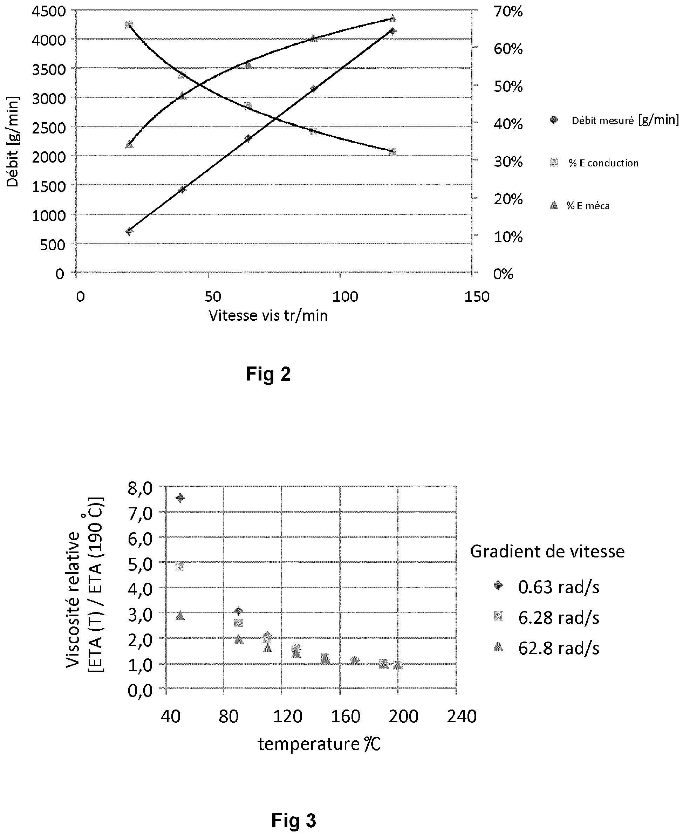

Le diagramme de la figure 2, déterminé pour les conditions d'obtention et pour une composition auto-obturante telles que définies ci-après, et dans lequel on porte en ordonnée la vitesse et en abscisse le débit de sortie, permet d'illustrer la répartition des apports thermiques provenant de l'énergie mécanique due au cisaillement d'une part et de l'énergie fournie par conduction par les parois d'autre part. Ces valeurs ont été obtenues avec une vitesse vis comprise entre 20 tr/min et 120 tr/min.

Au vu de ce qui vient d'être exposé, l'homme du métier observera sans difficulté que, plus la vitesse de la vis augmente, plus les échauffements liés à l'énergie mécanique augmentent, et moins le temps de séjour dans le moyen d'extrusion est important. En mettant en oeuvre des plans d'expérience appropriés il est facile de déterminer les paramètres de fonctionnement permettant de réguler cet équilibre.

Il est également possible d'adapter la longueur de la vis par rapport à son diamètre, de manière à augmenter le temps de séjour sans pénaliser le débit de sortie. En considérant une vis de diamètre D et de longueur L, le rapport L/D peut utilement être compris entre 15 et 30.

A titre d'exemple de mise en oeuvre du procédé selon l'invention, on indiquera ci-après les valeurs de consigne obtenues pour une composition auto-obturante dont la composition est décrite dans la publication FR 2 955 587 de la demanderesse. Cette composition est à base d'un coupage d'au moins deux élastomères solides, un élastomère polybutadiène ou copolymère de butadiène et d'un élastomère caoutchouc naturel ou polyisoprène de synthèse, (le rapport pondéral entre les deux élastomères étant compris dans un domaine de 10:90 à 90:10) ; d'une résine hydrocarbonée (entre 30 et 90 pce) ; et d'une charge (0 à moins de 30 pce).

Dans un exemple de composition auto-obturante utilisée pour la mise en oeuvre de l'invention, cette composition comporte un élastomère diénique insaturé solide (coupage de 50 pce de NR solide avec 50 pce de BR solide ; masse molaire moyenne en nombre Mn du coupage d'élastomères égale à environ 270 000 g/mol dans la composition finale) ; une résine hydrocarbonée "Escorez 2101" de la société Exxon Mobil (Tg égale à environ 44°C ; point de ramollissement égal à environ 90 C ; Mn égale à environ 800 g/mol ; Ip égal à environ 2,1) à un taux pondéral d'environ 50 pce; environ 15 pce d'élastomère polybutadiène liquide ("Ricon 154" de la société Sartomer Cray Valley - Tg égale à environ -20°C ; Mn égale à environ 5 000 g/mol et Ip égal à environ 1,4) ; 0,5 pce de soufre combiné à 0,5 pce de DPG ; elle comporte en outre une très faible quantité (environ 1 pce) de noir de carbone (N772) et environ 3 pce d'antioxydant.

Pour obtenir une composition dont la valeur de Tg δ du matériau non réticulé en entrée de procédé est de 1,52, et dont la valeur de Tg δ du matériau réticulé en sortie de la buse est de 1,15, les valeurs de consigne des paramètres du procédé en mode stabilisé ont été les suivants :

### Exemple 1 :

| | |
|---|---|
| Température | : 150°C à 180°C |
| Diamètre de vis | : 120mm |
| Longueur vis | : 1800 mm |
| Entrefer vis/fourreau | : 0,1mm |
| Longueur du conduit | : 500mm |
| Section de sortie de la buse | : 30mm² |
| Rapport des surfaces d'échange vis-fourreau | : 0,5 |
| Débit | : 1,5 Kg/min |
| Rapport conduction/auto-échauffement | : 1/3-2/3 |
| Temps de séjour moyen | : 8min |

### Exemple 2:

| | |
|---|---|
| Température | : 150°C à 200°C |
| Diamètre de vis | : 120mm |
| Longueur vis | : 1800 mm |
| Entrefer vis/fourreau | : 0,1mm |
| Longueur du conduit | : 2300mm |
| Section de sortie de la buse | : 20mm² |
| Rapport des surfaces d'échange vis-fourreau | : 0,5 |
| Débit | : 3 Kg/min |
| Rapport conduction/auto-échauffement | : 1/3-2/3 |
| Temps de séjour moyen | : 4min |

Le diagramme de la figure 3 illustre le comportement rhéofluidifiant de la composition auto-obturante utilisée pour la mise en oeuvre du procédé de l'invention où l'on remarque la variation de la viscosité avec le taux de cisaillement à basse température et son évolution avec la température. Ainsi, on observe que la viscosité diminue lorsque le gradient de vitesse augmente, ce qui donne un matériau de plus en plus fluide. On comprend que d'autres compositions auto-obturantes vulcanisables peuvent être utilisées avec le procédé de l'invention dès lors qu'elles présentent un comportement rhéofluidifiant équivalent.

Bien évidemment, il est également possible de mettre en oeuvre le procédé selon l'invention à l'aide de dispositifs d'extrusion connus, différents de celui ayant servi de base à la présente description.

A titre d'exemple on pourra utiliser une presse à injection, et on recherchera l'équilibre entre les calories apportées par un moyen de chauffage disposé autour du pot d'admission, et l'énergie mécanique transmise à la composition pendant le transfert dans le conduit et dans la buse. Le réglage des paramètres de ce dispositif peut paraitre plus aisé, mais il s'avère néanmoins couteux en temps de cycle dans la mesure où l'essentiel de l'apport thermique se fait par la conduction des parois du cylindre.

La dépose du produit auto-obturant sur la surface intérieure du pneumatique est opérée de manière connue par trancanage d'un cordon continu en approchant la sortie de la buse d'application 30 de ladite surface, après avoir préalablement mis ce dernier en rotation et, selon un pas défini, en déplaçant la buse tangentiellement à la surface intérieure correspondant à une direction sensiblement parallèle à l'axe de rotation du pneumatique. Le cordon formé en sortie de la buse d'application est ainsi déposé directement sur la surface interne du pneumatique.

La largeur et l'épaisseur du cordon peuvent être ajustées pour réduire le temps de pose. De bons résultats semblent pouvoir être obtenus en formant un cordon de largeur comprise entre 10 et 20 mm et d'une épaisseur comprise entre 1 et 2 mm.

De façon à améliorer la perception visuelle de cet enroulement, il est proposé de faire subir à la buse d'application un mouvement axial continu et alternatif, partant de l'équateur de l'enveloppe en se dirigeant vers la zone épaule 42, puis en repartant dans le sens inverse en direction de l'épaule opposée 43 en passant par l'équateur, et en revenant finalement au niveau de l'équateur.

L'intérêt de la méthode selon l'invention est également de pouvoir déposer une couche de mélange auto-obturant directement sur la surface intérieure du pneumatique quelle que soit l'étape de réalisation de ce dernier, et en particulier lorsque le pneumatique est totalement vulcanisé, comme cela est le cas par exemple dans les entrepôts destinés à la livraison des pneumatiques. Cette façon de procéder permet de différencier des pneumatiques au dernier moment, en fonction des options d'usage spécifiées par un client donné. Auquel cas, les moyens d'extrusion sont disposés dans le magasin de livraison et sont placés à l'usage des opérateurs chargés d'organiser les commandes.

## Revendications

1. Procédé de pose d'une composition auto-obturante à base de caoutchouc sur la surface intérieure d'une enveloppe de pneumatique (40) qui prend sa forme d'usage sous l'effet d'une pression d'air interne comprenant les étapes au cours desquelles :
- on introduit une composition auto-obturante non réticulée dans un moyen d'extrusion dont les caractéristiques géométriques et thermodynamiques ont été spécialement adaptées,
**caractérisée en ce que :**
- on ajuste les conditions de vitesse et de température du moyen d'extrusion de sorte que, au niveau d'une buse d'application (30) formant la filière de sortie dudit moyen d'extrusion, la composition auto-obturante est réticulée et,
- on approche la buse d'application de la surface interne de ladite enveloppe préalablement mise en mouvement relatif par rapport à la buse d'application, et on dépose directement un cordon (41) extrudé et réticulé de largeur et de profil donné sur ladite surface interne de l'enveloppe.

2. Procédé de pose selon la revendication 1 dans lequel la valeur du rapport G"/G' (Tgδ) de la composition auto-obturante diminue d'une valeur supérieure à 0,1 et préférentiellement d'une valeur supérieure à 0,2, lorsqu'elle passe de l'état non réticulée à l'état réticulée.

3. Procédé de pose selon la revendication 2, dans lequel la valeur du rapport G"/G' (Tgδ) de la composition auto-obturante non réticulée est comprise entre 1,2 et 3 et préférentiellement entre 1,25 et 2,5.

4. Procédé de pose selon l'une des revendications 2 ou 3, dans lequel la valeur du rapport G"/G' (Tgδ) de la composition auto-obturante réticulée est comprise entre 0,66 et 2 et de préférence comprise entre 0,80 et 1,4.

5. Procédé de pose selon l'une des revendications précédentes, dans lequel on combine les propriétés de rhéofluidité et de diminution de la viscosité fonction de la température de la composition auto-obturante avec le mode d'apport des calories de manière à maitriser l'intégrité de la matrice élastomérique en cours de réticulation dans l'extrudeuse.

6. Procédé de pose selon l'une des revendications 1 à 5, dans lequel le moyen d'extrusion est formé par une vis (20) de longueur (L) et de diamètre (D) mise à rotation à l'intérieur d'un fourreau (10).

7. Procédé de pose selon la revendication 6, dans lequel le rapport (L/D) entre la longueur et le diamètre de la vis est compris entre 15 et 30.

8. Procédé de pose selon l'une des revendications 1 à 7, dans lequel on ajuste les conditions de température et de vitesse du moyen d'extrusion de manière à ce que la composition séjourne à l'intérieur du moyen d'extrusion à une température comprise entre 150°C et 200°C pendant un temps compris entre 1min et 20min et de préférence compris entre 1 min et 6 min.

9. Procédé de pose selon l'une des revendications 1 à 8, dans lequel on ajuste les conditions de température et de vitesse du moyen d'extrusion de sorte que la quantité d'énergie thermique apportée à la composition auto-obturante sous forme d'énergie mécanique soit inférieure à 75% de l'énergie thermique totale apportée à ladite composition auto-obturante.

10. Procédé de pose selon l'une des revendications 1 à 9, dans lequel la vitesse de sortie de la composition auto-obturante de la buse d'application (30) est comprise entre 1ms⁻¹ et 4ms⁻¹.

11. Procédé de pose selon l'une des revendications 1 à 10, dans lequel on dépose la composition auto-obturante, par enroulement dudit cordon (41) en faisant varier le pas et la position axiale de la buse d'application par rapport à l'enveloppe de pneumatique.

12. Procédé de pose selon la revendication 11, dans lequel on pose ledit cordon de manière continue en déplaçant la buse d'application (30) tangentiellement à la surface interne du pneumatique depuis l'équateur de l'enveloppe vers une première épaule (42), puis en repartant dans le sens inverse en direction d'une deuxième épaule opposée (43) en passant par l'équateur, et en revenant finalement au niveau de l'équateur.

13. Procédé de pose selon l'une des revendications 1 à 12 dans lequel l'enveloppe de pneumatique est à l'état vulcanisé.

## Patentansprüche

1. Verfahren zur Platzierung einer selbstdichtenden Zusammensetzung auf der Basis von Gummi auf der Innenfläche eines Reifenmantels (40), welcher seine Verwendungsform unter der Einwirkung eines Innenluftdrucks annimmt, die folgenden Schritte umfassend:
- es wird eine nicht vernetzte selbstdichtende Zusammensetzung in ein Extrusionsmittel eingeführt, dessen geometrische und thermodynamische Merkmale speziell angepasst wurden,
**dadurch gekennzeichnet, dass**:
- die Geschwindigkeits- und Temperaturbedingungen des Extrusionsmittels derart eingestellt werden, dass an einer Auftragsdüse (30), welche das Austrittsmundstück des Extrusionsmittels bildet, die selbstdichtende Zusammensetzung vernetzt ist, und
- die Auftragsdüse an die Innenfläche des Mantels, der zuvor in eine relative Bewegung bezüglich der Auftragsdüse versetzt wurde, angenähert wird und eine extrudierte und vernetzte Raupe (41) von gegebener Breite und gegebenem Profil direkt auf die Innenfläche des Mantels aufgetragen wird.

2. Verfahren zur Platzierung nach Anspruch 1, wobei sich der Wert des Verhältnisses G"/G' (Tgδ) der selbstdichtenden Zusammensetzung um einen Wert, der größer als 0,1 ist, und vorzugsweise um einen Wert, der größer als 0,2 ist, verringert, wenn sie vom nicht vernetzten Zustand zum vernetzten Zustand übergeht.

3. Verfahren zur Platzierung nach Anspruch 2, wobei der Wert des Verhältnisses G"/G' (Tgδ) der nicht vernetzten selbstdichtenden Zusammensetzung zwischen 1,2 und 3 und vorzugsweise zwischen 1,25 und 2,5 liegt.

4. Verfahren zur Platzierung nach einem der Ansprüche 2 oder 3, wobei der Wert des Verhältnisses G"/G' (Tgδ) der vernetzten selbstdichtenden Zusammensetzung zwischen 0,66 und 2 und vorzugsweise zwischen 0,80 und 1,4 liegt.

5. Verfahren zur Platzierung nach einem der vorhergehenden Ansprüche, wobei die Eigenschaften der rheologischen Fluidität und der Verringerung der Viskosität in Abhängigkeit von der Temperatur der selbstdichtenden Zusammensetzung mit der Art und Weise der Zufuhr von Wärme kombiniert werden, um die Intaktheit der Elastomermatrix während der Vernetzung im Extruder zu beherrschen.

6. Verfahren zur Platzierung nach einem der Ansprüche 1 bis 5, wobei das Extrusionsmittel von einer Schnecke (20) mit einer Länge (L) und einem Durchmesser (D) gebildet wird, die innerhalb eines Mantels (10) in Drehung versetzt wird.

7. Verfahren zur Platzierung nach Anspruch 6, wobei das Verhältnis (L/D) zwischen der Länge und dem Durchmesser der Schnecke zwischen 15 und 30 liegt.

8. Verfahren zur Platzierung nach einem der Ansprüche 1 bis 7, wobei die Temperatur- und Geschwindigkeitsbedingungen des Extrusionsmittels derart eingestellt werden, dass die Zusammensetzung im Inneren bei einer Temperatur zwischen 150 °C und 200 °C für eine Zeit zwischen 1 min und 20 min und vorzugsweise zwischen 1 min und 6 min verweilt.

9. Verfahren zur Platzierung nach einem der Ansprüche 1 bis 8, wobei die Temperatur- und Geschwindigkeitsbedingungen des Extrusionsmittels derart eingestellt werden, dass die Menge an Wärmeenergie, die der selbstdichtenden Zusammensetzung in Form von mechanischer Energie zugeführt wird, kleiner als 75 % der Gesamtwärmeenergie ist, die der der selbstdichtenden Zusammensetzung zugeführt wird.

10. Verfahren zur Platzierung nach einem der Ansprüche 1 bis 9, wobei die Geschwindigkeit des Austritts der selbstdichtenden Zusammensetzung aus der Auftragsdüse (30) zwischen 1 ms⁻¹ und 4 ms⁻¹ liegt.

11. Verfahren zur Platzierung nach einem der Ansprüche 1 bis 10, wobei die selbstdichtende Zusammensetzung durch Wickeln der Raupe (41) aufgebracht wird, indem ein Variieren des Schrittes und der axialen Position der Auftragsdüse in Bezug auf den Reifenmantel bewirkt wird.

12. Verfahren zur Platzierung nach Anspruch 11, wobei die Raupe kontinuierlich platziert wird, indem die Auftragsdüse (30) tangential zur Innenfläche des Reifens vom Äquator des Mantels aus zu einer ersten Schulter (42) hin verlagert wird, danach in der umgekehrten Richtung zu einer gegenüberliegenden zweiten Schulter (43) hin über den Äquator hinweg und schließlich zurück auf die Höhe des Äquators bewegt wird.

13. Verfahren zur Platzierung nach einem der Ansprüche 1 bis 12, wobei sich der Reifenmantel im vulkanisierten Zustand befindet.

## Claims

1. Process for applying a rubber-based self-sealing composition on the inner surface of a tyre casing (40) which adopts its customary shape under the effect of an internal air pressure, comprising the steps during which:
- a non-crosslinked self-sealing composition is introduced into an extrusion means, the geometric and thermodynamic characteristics of which have been specially adapted,
**characterized in that:**
- the speed and temperature conditions of the extrusion means are adjusted so that, at an application nozzle (30) forming the outlet die of said extrusion means, the self-sealing composition is crosslinked and,
- the application nozzle is brought close to the internal surface of said casing previously set in relative motion with respect to the application nozzle, and an extruded and crosslinked bead (41) having a given width and profile is deposited directly on said internal surface of the casing.

2. Application process according to Claim 1, in which the value of the G"/G' (Tg δ) ratio of the self-sealing composition decreases by a value greater than 0.1 and preferentially by a value greater than 0.2, when it changes from the non-crosslinked state to the crosslinked state.

3. Application process according to Claim 2, in which the value of the G"/G' (Tg δ) ratio of the non-crosslinked self-sealing composition is between 1.2 and 3 and preferentially between 1.25 and 2.5.

4. Application process according to either of Claims 2 and 3, in which the value of the G"/G' (Tg δ) ratio of the crosslinked self-sealing composition is between 0.66 and 2 and preferentially between 0.80 and 1.4.

5. Application process according to one of the preceding claims, in which the properties of shear thinning and of reducing the viscosity as a function of the temperature of the self-sealing composition are combined with the method of supplying heat so as to control the integrity of the elastomeric matrix during crosslinking in the extruder.

6. Application process according to one of Claims 1 to 5, in which the extrusion means is formed by a screw (20) of length (L) and of diameter (D) rotated inside a barrel (10).

7. Application process according to Claim 6, in which the ratio (L/D) between the length and the diameter of the screw is between 15 and 30.

8. Application process according to one of Claims 1 to 7, in which the temperature and speed conditions of the extrusion means are adjusted so that the composition remains inside the extrusion means at a temperature between 150°C and 200°C for a time of between 1 min and 20 min and preferably of between 1 min and 6 min.

9. Application process according to one of Claims 1 to 8, in which the temperature and speed conditions of the extrusion means are adjusted so that the amount of thermal energy supplied to the self-sealing composition in the form of mechanical energy is less than 75% of the total thermal energy supplied to said self-sealing composition.

10. Application process according to one of Claims 1 to 9, in which the output speed of the self-sealing composition from the application nozzle (30) is between 1 ms⁻¹ and 4 ms⁻¹.

11. Application process according to one of Claims 1 to 10, in which the self-sealing composition is deposited by coiling said bead (41) by varying the pitch and the axial position of the application nozzle with respect to the tyre casing.

12. Application process according to Claim 11, in which said bead is applied continuously by moving the application nozzle (30) tangentially to the internal surface of the tyre from the equator of the casing to a first shoulder (42), then by starting again in the opposite direction in the direction of a second opposite shoulder (43) passing through the equator, and by finally coming back to the equator.

13. Application process according to one of Claims 1 to 12, in which the tyre casing is in the vulcanized state.
